Europäisches Patentamt

European Patent Office

Office européen des brevets

(11) Publication number: **0 354 656 B1**

# EUROPEAN PATENT SPECIFICATION

(45) Date of publication of patent specification: **24.11.93**  (51) Int. Cl.5: **C02F 1/04**, C02F 1/72

(21) Application number: **89306540.9**

(22) Date of filing: **27.06.89**

(54) Process for the catalytic treatment of wastewater.

(30) Priority: **08.08.88 US 230241**

(43) Date of publication of application:
**14.02.90 Bulletin 90/07**

(45) Publication of the grant of the patent:
**24.11.93 Bulletin 93/47**

(84) Designated Contracting States:
**BE DE ES FR GB IT NL SE**

(56) References cited:
**FR-A- 2 354 974**
**FR-A- 2 609 013**
**GB-A- 2 068 947**
**US-A- 3 487 016**

**CHEMICAL ENGINEERING PROGRESS, vol.
50, no. 8, August 1954, pages 425-427, AICHE,
New York, US; J. OLIVER: "Catalytic oxidation
of aqueous wastes"**

**SEWAGE AND INDUSTRIAL WASTES, vol. 24,
no. 3, March 1952, pages 288-299, Cham-
paign, Illinois, US; R.V. GREEN et al.:
"Destructive catalytic oxidation of aqueous
waste materials"**

(73) Proprietor: **CHEMICAL WASTE MANAGEMENT,
INC.**
**3003 Butterfield Road**
**Oak Brook Illinois 60521(US)**

(72) Inventor: **Grutsch, James F.**
**7503 Alexander**
**Hammond Indiana(US)**

(74) Representative: **Brooks, Nigel Samuel**
**Hill Hampton**
**East Meon**
**Petersfield Hampshire GU32 1ON (GB)**

## Description

### FIELD OF INVENTION

This invention relates generally to the treatment and cleanup of contaminated wastewater. The treatment of contaminated wastewater has become a national environmental priority, since wastewater is being created by so many sources such as landfills, research, industry, power plants, government and many other chemical, pharmaceutical, biological, plating, and photographic processes.

More specifically this invention involves a novel process that concentrates contaminants and catalytically oxidizes volatile pollutants in wastewater. Further, this invention has the capability of providing a useful condensate product. The novel process disclosed herein couples efficient evaporation with gas phase catalytic oxidation. Optionally, this process can provide for the recapture of distilled quality water that is substantially free of minerals and organics and that may, therefore, be safely returned to rivers and streams or reused in industrial processes.

### INFORMATION DISCLOSURE

The problems associated with the disposal of contaminated wastewater are well known in the art. Frequently, treatment involves air stripping and the capture of the volatilized organics by a carbon bed. Certain priority pollutants are not captured, or are incompletely captured, by the carbon bed. Alternatively, contaminated wastewater streams can be disposed of using deep well technology or are subject to high temperature incineration.

The use of evaporation in pollution abatement is also known to the art. In particular vertical tube falling film evaporation with vapor recompression has been suggested to efficiently concentrate wastewater streams containing a high concentration of total dissolved solids. The use of such evaporators is described in an ASME publication entitled "Development History of the RCC Brine Concentrator For Concentrating Cooling Tower Blow Down", by J.H. Anderson, 1976.

Oxidation of organic compounds dissolved in wastewater streams is likewise well known in the art. Both liquid phase and vapor phase oxidation processes are known. For example, U.S. Patent No. 4,021,500 (Rogers) discloses an improved oxidative dehydration system to catalytically remove dissolved hydrocarbons. A hydrocarbon laden liquid water stream is mixed with an air/steam stream and is contacted with a solid catalyst to yield an effluent of water vapor, carbon monoxide and carbon dioxide.

U.S. Patent No. 4,699,720 (Harada et al.) teaches a process for treating wastewater wherein a stream containing suspended solids, ammonia and chemically oxidizable substances is subjected to a liquid phase catalytic oxidation reaction. Separation of the suspended or dissolved solids occurs after the oxidation reaction by employing a reverse osmosis process. Likewise, U.S. Patent No. 4,632,766 (Firnhaber et al.) discloses a method of treating wastewater wherein a concentrated "slime" containing water is subjected to a noncatalytic multistage oxidation in the presence of air or oxygen. Yet another wastewater treatment process using liquid phase catalytic oxidation is disclosed in U.S. Patent No. 4,294,706 (Kakihara et al.). This reference suggests the removal of suspended solids prior to treatment (Column 3, lines 12-15).

Extraction of volatile contaminates from waste streams followed by catalytic destruction of the volatized contaminates has been practiced in the art. For example, U.S. Patent No. 3,127,243 (Konikoff) teaches a process whereby human waste is subjected to a noncontinuous vacuum distillation process to produce vaporized materials which are passed to a high temperature catalytic reactor containing a noble metal catalyst. The reaction product is then condensed to produce potable water. Likewise, U.S. Patent No. 3,487,016 (Zeff) teaches the oxidation of organic or inorganic materials in liquid or vapor phase using oxygen-containing gas and a catalyst containing either manganese or lead. Oxidation is performed at low temperatures and at atmospheric or less pressure. U.S. Patent No. 3,804,756 (Callahan et al.) teaches that volatile impurities may be steam stripped from wastewaters and then chemically oxidized with a variety of catalyst formulations, with copper oxide being preferred.

The elimination of volatile organic compounds (VOC) from industrial/commercial waste gases is also well known in the art. Destruction of VOC is accomplished by catalytic incinerators. A recent article entitled, "Destruction of Volatile Organic Compounds Via Catalytic Incineration" authored by B.H. Tichenor and M.A. Palazzol, Environmental Progress, Volume 6, No. 3, August, 1987, reports the results of an investigation into various catalytic incinerator designs. Tests were performed by evaporating organic compounds into clean air streams and then passing the streams across a monolithically supported precious metal catalyst. Catalytic incineration of noxious industrial fumes is also disclosed in U.S. Patent No. 4,330,513 (Hunter et al.) This reference discloses a process where fumes and waste gases containing hydrocarbons are contacted with a fluidized bed of nonprecious metal solid catalyst. Additionally, a series of U.S. Patents (Nos. 3,823,088; 3,992,295; 3,997,440; 4,062,772; 4,072,608 and 4,268,399) teach that waters containing minor amounts of dissolved organic materials can be purified by contacting either a liquid or gaseous phase with a promoted zinc aluminate catalyst.

Further, the catalytic combustion of organic material in an aqueous stream is known from Chemical Engineering Progress, Volume 50, No. 8, August 1954, pp 425-427.

FR-A-2,609,013 discloses a process for continuously treating a waste stream contaminated with volatile chemically oxidizable pollutants and nonvolatile pollutants comprising, in combination the steps of:

(a) continuously concentrating the nonvolatile pollutants in the waste stream to be treated by a continuous evaporation process that simultaneously produces a first stream comprising the concentrated nonvolatile pollutants and a second water rich vapour phase stream substantially free of minerals, dissolved solids and metals, the second stream comprising steam and volatile chemically oxidizable pollutants originally contained in the waste stream;

(b) removing from the continuous evaporation process the first stream comprising concentrated nonvolatile pollutants, the removal occurring while the continuous evaporation process is ongoing;

(c) recycling the first stream;

(d) removing a slip stream from the first stream; and

(e) contacting substantially all of the second stream with a solid oxidation catalyst in the presence of steam at gas phase oxidation conditions to convert the volatile chemically oxidizable pollutants, thereby producing a gaseous reaction product comprising steam and incondensable gases.

Although the art has understood the need and has attempted the treatment of contaminated wastewaters and contaminated gas streams, it has failed to solve the problem of efficiently treating a wastewater stream containing both dissolved solids or nonvolatile pollutants and volatile chemically oxidizable contaminants. The present invention presents a novel continuous treatment method for concentrating dissolved solids or nonvolatile pollutants and chemically oxidizing the oxidizable contaminants. Further, this invention presents a catalytic oxidization process that can be carried out in the presence of steam at gas phase conditions.

Summary of the Invention

This invention is directed toward a novel process for the treatment of wastewater streams. More specifically the invention provides a means to convert chemically oxidizable volatile pollutants in wastewater to inert organic gases. This process also has the potential to produce a useful condensate product of distilled water quality, free of minerals and organics.

It is an object of this invention to provide a process that eliminates the environmental problems commonly associated with the disposal of contaminated wastewater streams.

Another object of this invention is to provide a process that specifically is designed to treat highly mineralized wastewaters containing toxic organic and inorganic compounds which, if treated by conventional treating processes, would be too mineralized to discharge to surface freshwater receiving streams.

Yet another object of the present invention is to provide a wastewater treatment process that eliminates the need for costly incineration of contaminated aqueous streams.

Still another object of the present invention is to provide a wastewater treatment process that is environmentally safe and a cost effective substitute for deep well disposal of contaminated wastewater.

According to the invention there is provided a process for continuously treating a waste stream contaminated with volatile chemically oxidizable pollutants and nonvolatile pollutants comprising, in combination the steps of:

(a) continuously concentrating the nonvolatile pollutants in the waste stream to be treated by a continuous evaporation process that simultaneously produces a first stream comprising the concentrated nonvolatile pollutants and a second water rich vapour phase stream substantially free of minerals, dissolved solids and metals, the second stream comprising steam and volatile chemically oxidizable pollutants originally contained in the waste stream;

(b) removing from the continuous evaporation process the first stream comprising concentrated nonvolatile pollutants, the removal occurring while the continuous evaporation process is ongoing;

(c) recycling the first stream;

(d) removing a slip stream from the first stream;

(e) contacting substantially all of the second stream with a solid oxidation catalyst in the presence of steam at gas phase oxidation conditions to convert the volatile chemically oxidizable pollutants, thereby producing a gaseous reaction product comprising steam and incondensable gases;

characterized in that the process comprises the additional steps of:

(f) condensing the gaseous reaction product and indirectly contacting the waste stream with the condensed reaction product, thereby supplying a portion of the energy required for evaporation of the waste stream and preheating it prior to subjection of the waste stream to the evaporation process in which the volatile pollutants and water are evaporated; and

(g) recycling that portion of the first stream comprising concentrated nonvolatile pollutants of substantially the same composition as that in the first stream, from which the slip stream has been removed, directly back to the continuous evaporation process without subjecting the recycled first stream to any indirect heating means, the waste stream being added to the recycled portion of the first stream at a point downstream of the removal of the slip stream and upstream of the continuous evaporation process and in that;

(h) the solid oxidation catalyst is in the form of particles and comprises a non precious metal.

Brief Description of the Drawings

The accompanying drawings illustrate preferred embodiments of the invention when treating landfill leachates containing VOC pollutants. Specifically;

Figure 1 is a flow diagram of an embodiment of the invention illustrating the treatment of wastewater without condensation of the oxidation reaction products.

Figure 2 is a flow diagram of am embodiment of the invention adapted for condensation of oxidation reaction products.

Figure 3 is a flow diagram of an embodiment the invention adapted for the treatment of a wastewater containing a high level of VOC pollutants and a high concentration of incondensable gases.

## DETAILED DESCRIPTION OF PREFERRED EMBODIMENTS

The instant invention is capable of processing a variety of complex wastewater streams containing a wide range of pollutants. For example, the invention can process wastewaters from refinery and chemical plant operations and wastewaters emanating from mineral concentration processes, metals concentration processes, metal extraction leaching processes, and solvent stripping processes. The instant invention is especially adapted to process highly mineralized wastewaters contaminated with volatile chemically oxidizable pollutants.

Wastewater streams can be generally characterized as containing principally water that is contaminated with volatile chemically oxidizable pollutants comprising both organic and inorganic compounds. Further, wastewater typically contains nonvolatile pollutants, such as dissolved solids. The volatile chemically oxidizable pollutants include compounds, such as alcohols, aromatic hydrocarbons, chlorinated hydrocarbons, ammoniacal compounds, cyanide and sulfur containing compounds, and a variety of other hydrocarbons that are known pollutants. The dissolved solids or nonvolatile pollutants typically comprise minerals, which are broadly defined as any element, inorganic compound or mixture occurring or originating in the earth's crust and atmosphere, including all metals and non-metals, their compounds and ores. Included in the dissolved solids can be heavy metals, such as, nickel, zinc, cadmium, mercury, arsenic, and lead. Typically the wastewater stream has a dissolved solids content of at least 10,000 mg per liter, more typically having a dissolved solids concentration ranging from about 10,000 to about 30,000 mg per liter.

The process of the invention is particularly well suited for the treatment of leachates that emanate from landfills. The complex nature of the constituents of such wastewater streams is illustrated by the following compositional profile of a representative landfill leachate.

| Parameter | Concentration. mg/l |
|---|---|
| Total Dissolved Solids (TDS) | 10,000 - 30,000 |
| Chemical Oxygen Demand (COD) | 10,000 - 50,000 |
| Total Organic Carbon (TOC) | 2,000 - 15,000 |
| Iron | 500 - 2,000 |
| Nickel, Zinc, Cadmium, Mercury Arsenic, Lead, etc. | High |
| Chloride, Sulfate, etc. | 1000 + |
| Priority Organic Pollutants | High |

According to the invention, the wastewater stream to be treated is first subjected to an evaporation step to concentrate the dissolved solids into a first stream comprising concentrated nonvolatile pollutants, sometimes referred to as "slurry". The unit operation of evaporation is well known in the art and details need not be included herein. Any evaporation design that can concentrate nonvolatile pollutants from a liquid stream and produce a water rich vapor phase stream substantially free of dissolved solids can be used in the invention. Examples of known evaporator designs include forced circulation, submerged tube forced circulation, Oslo-type crystallizer, short and long tube vertical, horizontal tube, and falling film. It is preferred to employ a forced circulation type evaporator. The process conditions for the evaporation step include a temperature of from about 82°C (180°F) to about 170°C (338°F) and a pressure from about subatmospheric to about 790 kPa (abs) (100 psig), with most preferred temperature and pressure ranges from about 100°C (212°F) to about 150°C (302°F) and from about atmospheric to about 446 kPa (abs) (50 psig), respectively.

The stream of concentrated nonvolatile pollutants removed from the evaporator may have a pollutant concentration in the range of from about 0 to about 100 weight percent solids, preferably from about 20 to about 70 wt.%, and most preferably from about 40 to about 65 wt.%. At this concentration level the stream of concentrated pollutants is ready for final disposal using any known process, such as pond retention, crystallization or chemical stabilization, or mechanical drying.

The second stream, comprising a water rich vapor phase obtained from the evaporator, is contacted with a solid catalyst in a reaction zone maintained at oxidation reaction conditions. The chemically oxidizable volatile pollutants in the wastewater stream that were volatized in the evaporation step are oxidized to produce a gaseous reaction product comprising substantially steam and incondensable gases, primarily carbon dioxide and nitrogen.

Although not completely understood and not wishing to be bound by a particular theory it is believed that the presence of steam in the oxidation reactor is beneficial to achieving complete oxidation of volatile pollutants. It is believed that the steam directly participates in the oxidation of pollutants either by reacting catalytically, thermally, or by reacting with partially oxidized compounds. This theory of direct steam participation in pollutant removal could also help explain the apparent lack of an oxygen effect since steam is so overwhelmingly present.

Prior to the oxidation step the water rich vapor phase stream may be compressed by mechanical means or by a steam jet to increase the latent heat value of the vapor phase stream. Likewise, the gaseous reaction product from the oxidation step may be compressed, in preference to the compression of the water rich vapor phase stream, to increase its latent heat value. In either case the latent heat can be used to provide the partial or total heat requirement needed in the evaporation step.

The catalytic oxidation is performed in a reactor at gas phase conditions using a solid catalyst. The oxidation reaction conditions include a reaction temperature in the range of from about 204°C (400°F) to about 1200°C (2192°F). Most preferably the reaction temperature should be maintained in the range from about 371°C (700°F) to about 677°C (1250°F). The gas space velocity of the water rich vapor phase stream in the reaction zone is from about 0.1 $sec^{-1}$ to about 1000 $sec^{-1}$, most preferably from about 5 $sec^{-1}$ to about 100 $sec^{-1}$. The reaction zone pressure preferably is in the operating range of from subatmospheric to about 790 kPa (abs) (100 psig), with a most preferred operating pressure of from about atmospheric to about 446 kPa (abs) (50 psig). The chemically oxidizable compounds in the water rich vapor phase stream are catalytically oxidized in the presence of the steam that was generated during the evaporation step.

The solid catalyst used in the oxidation zone may be selected from any of the known commercially existing oxidation catalyst compositions, or mixtures of known oxidation catalysts, that meet the required standards for stability and activity and that possess a high selectivity for oxidation of volatile organic and inorganic compounds. The active component of the oxidation catalysts is a metal, preferably a nonprecious metal, supported on a solid carrier. The preferred solid carrier is alumina, however, any known carriers may be used, for example, silica, silica-alumina, clay or like materials. The carrier may be in the form of spheres, pellets or extrudates. The amount of active metal on the catalyst is preferably from about 5 to about 50 weight percent, based on the total catalyst weight. More preferably the metal component comprises from about 15 to about 25 weight percent of the catalyst. A preferred oxidation catalyst composition includes chromic oxide and alumina in the form of an extrudate. This preferred catalyst and its method of preparation are more thoroughly described in U.S. Patent No. 4,330,513 (Hunter et al), which is incorporated herein by reference.

The oxidation reaction of this invention is exothermic and can cause reaction temperatures to increase to excessive levels. To prevent temperatures from exceeding approximately 1200°C (2192°F), a quench stream may be added to the oxidation reaction zone. A preferred quench medium is the condensate product obtained from the evaporator. Depending upon the chemical oxygen content of the water rich vapor phase stream and the level of chemically oxidizable compounds to be reacted, it may be necessary to supply additional chemical oxygen as a reactant to achieve the high level of conversion required in the oxidation reaction. Additional chemical oxygen can be supplied by any known means, with the injection of air, oxygen enriched air, or $O_2$ being preferred. On initial start-up of the oxidation reactor it may be necessary to use an external heat source to increase the temperature of the reactants to a point where the oxidation reaction will begin. To maintain the appropriate inlet reactor temperature of the reactants during the process it may be necessary to perform indirect heat exchange of the reactants with a portion of the reaction products.

The oxidation reaction step of the invention is capable of catalytically oxidizing a wide range of volatile organic and inorganic compounds, including halogenated organics, organosulfur compounds and organonitrogen compounds. The gaseous reaction product obtained from the oxidation of such compounds may be highly acidic, containing HCl, $SO_x$ and $NO_x$. The acidic nature of the product can have deleterious effects on downstream equipment metallurgy. Neutralization of the acidic gaseous reaction products can prevent corrosion and the eventual destruction of downstream equipment. Any neutralization process known to the art may be used to neutralize the acidic reaction products. A preferred neutralization method involves the use of a limestone bed located immediately downstream of the oxidation reactor. The inherent alkalinity of limestone will neutralize and remove any acidic gases contained in the gaseous reaction stream. Depending upon the amount of acidic gas present, multiple limestone beds arranged in series flow may be employed. A preferred type of limestone is dolomitic limestone, which contains a carbonate of calcium and magnesium. The magnesium is better suited to capture volatized borates and arsenates.

In addition to the neutralization of acidic gases in the gaseous reaction product, the limestone bed may also be utilized as a temperature control means when the gaseous reaction product is used to supply the heat of evaporation in the evaporation step. Temperature control may be desirable to prevent thermal stress of the evaporator. Thermal stress occurs because the gaseous reaction product from the highly exothermic catalytic oxidation reaction can, in some instances, be several hundred degrees higher in temperature than the normal operating temperature of the evaporator. Normally it is preferred that the medium used to supply the heat of evaporation be only 5 to 17°C (9 to 30°F) higher than the boiling point of the wastewater to be evaporated. An alternative means to prevent thermal stress is to quench the gaseous reaction products, preferably using a portion of the condensate product stream.

The composition of the gaseous reaction product exiting from the oxidation reactor comprises substantially steam and incondensable gases, primarily carbon dioxide and $N_2$. The gaseous reaction product can optionally be condensed to produce a useful condensate of substantially liquid water. Condensation can be performed by any method known to the art. One method is to pass the gaseous reaction product through an economizer to utilize its latent heat to effect the evaporation of feed wastewater. Alternatively, the condensation of the gaseous reaction product can be performed in an evaporator while simultaneously utilizing its latent heat to effect the evaporation of the wastewater. As the hot gaseous oxidation reaction product releases its heat to evaporate the wastewater, condensation occurs and the condensate produced is drawn off as a liquid water product stream. A condensate product stream produced by the process of the invention is comprised of substantially liquid water that is free of minerals and organics and is reusable as a condensate for other processes or the condensate may be directly disposed of to existing surface water receiving streams without the need for additional treatment.

A more complete understanding of the inventive concept of this invention may be obtained by a review of the accompanying figures, which present three preferred embodiments of the invention. The presentation of these embodiments is not intended to exclude from the scope of the inventive concept those other embodiments set out herein or other reasonable and normal modifications of the inventive concept. Details, such as miscellaneous pumps, heaters, and coolers, condensers, start-up lines, valving, and similar hardware, have been omitted as being nonessential to a clear understanding of the preferred embodiments of the invention.

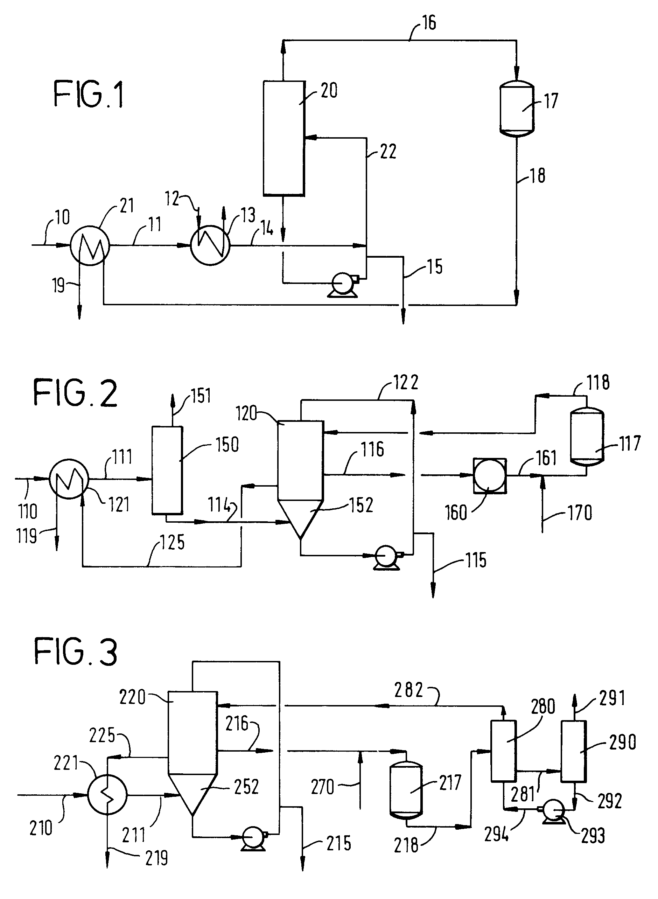

Figure 1 is a flow diagram of the invention illustrating the treatment of wastewater without condensation of the oxidation reaction products. Wastewater to be treated is carried by line 10 to heat exchanger means 21 where the wastewater is heated indirectly with hot gaseous oxidation reaction product in line 18. The heated wastewater is carried by line 11 to a second indirect heat exchanger means 13, wherein the wastewater is further heated and carried by line 14 to evaporator feed line 22, where it is mixed with a concentrated slurry of nonvolatile pollutants removed and recirculated from the bottom of evaporator 20.

The admixture of heated wastewater and concentrated slurry in line 22 is introduced into evaporator means 20 wherein volatile chemically oxidizable pollutants and steam are vaporized and removed overhead via line 16. The vaporized pollutants and steam are contacted with a solid nonprecious metal oxidation catalyst in reactor 17. In some instances it may be necessary to increase the temperature of the material in line 16 prior to contacting with the oxidation catalyst. Additionally, it may be necessary, depending on the chemical oxygen content of the material in line 16, to supply additional oxygen from an external source to achieve complete oxidation of the volatile pollutants.

The gaseous reaction products formed in reactor 17 are removed via line 18, indirectly heat exchanged in heat exchanger means 21 with the wastewater feed in line 10, and then removed from the process via line 19. Removal of the nonvolatile pollutants is effected by taking a slip stream 15 from the concentrated slurry that was removed from the bottom of evaporator means 20.

Referring now to the embodiment illustrated in Figure 2, the wastewater to be treated is carried by line 110 to heat exchanger means 121 where it is heated indirectly with a condensate product stream 125. The heated wastewater is carried by line 111 and passed into deaeration vessel 150 where incondensable gases, such as, oxygen, nitrogen, carbon dioxide and possibly ammonia are removed via vent line 151. The deaerated wastewater is carried by line 114 to sump 152 of evaporator 120. A concentrate or slurry of nonvolatile dissolved and slurried pollutants, both inorganic or organic, is contained in sump 152. This slurry is continuously circulated through line 122 to the top of evaporator 120 where the water and volatile chemically oxidizable pollutants are vaporized. The water rich vapor generated in the evaporator is substantially free of all dissolved solids and is removed from the evaporator by line 116. The water rich vapor phase stream in line 116 compressed by compression means 160 and returned to line 161.

The compressed water rich vapor phase stream in line 161 is then combined with an oxygen containing stream 170 prior to entering oxidation reactor 117. The oxidation reaction achieves at least 95% conversion, preferably 99 + % conversion, of the chemically oxidizable compounds in the water rich vapor phase stream. This produces a gaseous reaction product of substantially steam and incondensable gases, primarily carbon dioxide. The gaseous reaction product is removed from the oxidation reactor by line 118. A portion of the gaseous reaction product in line 118 can be used as a preheat means for maintaining the temperature of the reactants entering the oxidation reactor.

Condensation of the gaseous reaction product is accomplished upon introduction of the gaseous reaction product in line 118 to evaporator 120. The condensate formed in the evaporator is continuously removed through lined 125, heat exchanged with incoming wastewater and removed from the process via line 127.

Figure 3 illustrates yet another embodiment of the invention adapted for processing wastewater containing a high concentration of chemically oxidizable compounds, as well as a significant fraction of incondensable gases. When the fraction of incondensable gases entering the process contains thirty percent or more incondensable components, the heat transfer may be intolerably impaired. Likewise, high levels of chemically oxidizable compounds cause a problem by appearing in the deaerator vent. In Figure 3, polluted wastewater is fed to the process via line 210 and is heat exchanged in heat exchanger means 221 with product condensate in line 225 to increase the temperature of the wastewater to near its boiling point. The heated wastewater is carried by line 211 to evaporator sump 252 where the nonvolatile pollutants in the wastewater are concentrated. The concentrated wastewater is continuously circulated to the top of evaporator 220. Slip stream 215 is used to continuously withdraw nonvolatile pollutants from the process for eventual disposal.

The water rich vapor phase stream containing steam and chemically oxidizable compounds vaporized in evaporator 220 are drawn off through line 216, mixed with an oxygen containing gas stream 270 and catalytically oxidized in oxidation reactor 217. Gaseous reaction products of substantially steam and incondensable gases, such as carbon dioxide, are removed from the oxidation reactor by line 218 and passed to steam boiler 280. A portion of the gaseous reaction product may be used to indirectly heat exchange the reactants being fed to the oxidation reactor. The gaseous reaction product is condensed in the steam boiler and sent through line 281 to deaerator 290 where incondensable gases such as nitrogen, oxygen, carbon monoxide, and carbon dioxide are vented through line 291. The deaerated condensed reaction products are withdrawn through line 292 and circulated via pump 293 through line 294 back to steam boiler 280. A portion of the deaerated condensed reaction product in line 294 may be used as a quench in the oxidation reactor to maintain the exothermic reaction temperature in the preferred range.

Steam from the steam boiler is removed overhead through line 282 and sent to the shell side of evaporator 270 wherein it is condensed and its latent heat is used to evaporate the concentrated wastewater on the tube side of the evaporator. Optionally, a steam compressor may be employed to compress the steam in line 282 to increase its heat value. However, pump 293 can be designed to provide a sufficient system pressure to maximize the heat value of the steam obtained from the steam boiler. The product condensate is removed from the evaporator through line 225, heat exchanged with the wastewater feed and then removed from the process through line 219. The product condensate in line 219 is of distilled water quality containing substantially no minerals and no dissolved organics.

In order to more fully demonstrate the attendant advantages arising from the present invention the following examples are set forth. It is to be understood that the following are by way of example only and are not intended as an undue limitation on the otherwise broad scope of the invention.

Example 1

To demonstrate the effectiveness of catalytic oxidation of volatile chemically oxidizable pollutants laboratory test runs were performed in accordance with the oxidation process of the invention. A laboratory continuous oxidation unit was used employing toluene as a surrogate volatile pollutant. The catalyst used comprised chromic oxide on an alumina support. Steam, oxygen and toluene were fed at a pressure of about 25 psig (1.72 bar) to a single-pass reactor containing the catalyst. The gaseous reaction products were condensed and sampled by gas chromatograph.

The toluene feed rate was set to achieve 500 ppm in steam on a volume basis and the oxygen was added to achieve 2% by volume of steam. The catalyst volume was varied to examine the effect of varying the gas space velocity. Table 1 contains a summary of test data results.

Test run results in Table 1 clearly show that the oxidation of toluene (i.e., removal efficiency) was greater than 95% in all cases. Further, the gas space velocity, in the range tested, did not significantly affect the removal efficiency.

TABLE 1

| Runs Using Toluene as Surrogate Pollutant | | | | | |
|---|---|---|---|---|---|
| Runs | Preheat Temp. Celsius | Reactor Temp. Celsius | Space Velocity per sec. | Toluene out (ppm) | Removal Efficiency (%) |
| 1 | 317 | 362 | 9.2 | 18.82 | 96.24 |
| 2 | 318 | 369 | 9.3 | 10.97 | 97.81 |
| 6 | 373 | 419 | 10.0 | 7.20 | 98.56 |
| 7 | 373 | 424 | 10.1 | 5.10 | 98.98 |
| 3 | 432 | 482 | 11.0 | 1.58 | 99.68 |
| 4 | 432 | 487 | 11.0 | 1.17 | 99.77 |
| 12 | 427 | 479 | 7.3 | 1.52 | 99.70 |
| 13 | 427 | 479 | 7.3 | 1.61 | 99.68 |
| 10 | 510 | 563 | 12.1 | 0.73 | 99.85 |
| 11 | 510 | 566 | 12.2 | 0.93 | 99.81 |
| 15 | 510 | 702 | 9.4 | <0.05 | >99.99 |
| 14 | 513 | 702 | 9.4 | <0.05 | >99.99 |

Example 2

Test runs were performed to evaluate the effect of oxygen concentration on the oxidation process of this invention. The experimental conditions and apparatus used in Example 1 were followed for the test runs of this example with the exception that the oxygen concentration of the stream fed to the reactor was varied. Runs 3 and 4 had $O_2$ concentrations of 2% by volume of steam. Run 5 had 4% by volume and Runs 8 and 9 had 10% by volume. The experimental results presented in Table 2 shows complete oxidation of toluene for all $O_2$ concentration levels tested.

TABLE 2

| Runs Using Toluene as Surrogate Pollutant | | | | | |
|---|---|---|---|---|---|
| Run | Preheat Temp. Celsius | Reactor Temp. Celsius | Space Velocity per sec. | Toluene out (ppm) | Removal Efficiency (%) |
| 3 | 432 | 482 | 11.0 | 1.58 | 99.68 |
| 4 | 432 | 487 | 11.0 | 1.17 | 99.77 |
| 5 | 431 | 483 | 11.2 | 1.68 | 99.66 |
| 8 | 427 | 478 | 10.7 | 0.96 | 99.81 |
| 9 | 429 | 481 | 10.7 | 1.10 | 99.78 |

Example 3

Oxidation of a chlorinated hydrocarbon in accordance with the invention was performed using the experimental procedure of Example 1. The chlorinated hydrocarbon used in Runs 16 and 17 was tetrachloroethylene (TCE). The experimental results in Table 3 show that TCE was removed at a high efficiency.

TABLE 3

| Runs Using TCE as Surrogate Pollutant | | | | | |
|---|---|---|---|---|---|
| Run | Preheat Temp. Celsius | Reactor Temp. Celsius | Space Velocity per sec. | TCE out (ppm) | Removal Efficiency (%) |
| 16 | 509 | 677 | 9.2 | 1.12 | 99.78 |
| 17 | 513 | 679 | 9.2 | 0.67 | 99.87 |

Example 4

Oxidation of volatile inorganic compounds in accordance with the invention was performed using the experimental procedure of Example 1. The volatile inorganic compound used in Runs 18 and 19 was ammonia, fed to the oxidation reactor as a 28% ammonium hydroxide solution. The experimental results in Table 4 show that ammonia was removed at high efficiency.

TABLE 4

| Runs Using Ammonia as Surrogate Pollutant | | | | | |
|---|---|---|---|---|---|
| Run | Preheat Temp. Celsius | Reactor Temp. Celsius | Space Velocity per sec. | Ammonia out (ppm) | Removal Efficiency (%) |
| 18 | 513 | 677 | 9.2 | 0.12 | 99.98 |
| 19 | 513 | 678 | 9.2 | 0.04 | 99.99 |

Example 5

Oxidation of a mixture of pollutants was performed in accordance with the invention to demonstrate that compounds that are known to be more difficult to oxidize are readily oxidizable in the presence of compounds easily oxidized. The experimental procedure of Example 3 was repeated except that 250 and 288 ppm of propane were additionally added to the 500 ppm of TCE to give 750 ppm and 788 ppm total volatile pollutants in Runs 20 and 21, respectively. Ammonia was added in an amount of 750 and 799 ppm to the 500 ppm of TCE to give 1250 and 1299 ppm total pollutants in Runs 22 and 23, respectively. The experimental results are presented in Table 5. The results clearly show that removal efficiency of a more difficult to oxidize compounds, i.e., TCE, is not reduced by the presence of propane or ammonia, which are readily oxidized.

TABLE 5

| Runs Using TCE Mixed Surrogates | | | | | |
|---|---|---|---|---|---|
| Run | Preheat Temp. Celsius | Reactor Temp. Celsius | Space Velocity per sec. | TCE out (ppm) | Removal Efficiency (%) |
| 20 | 510 | 677 | 9.2 | 0.32 | 99.94 |
| 21 | 510 | 677 | 9.2 | 0.46 | 99.91 |
| 22 | 510 | 672 | 9.1 | <0.02 | >99.996 |
| 23 | 510 | 671 | 9.1 | <0.02 | >99.996 |

Example 6

In accordance with the process of the invention, a 19-day continuous run was made on an experimental pilot scale unit having an evaporator section and an oxidation section. In the evaporator section, a wastewater feed tank wag connected by piping and a pump to a steam heated shell and tube heat exchanger. A recirculation pump forced the feed through the heat exchanger into a vapor body where evaporation of hot volatiles occurred, and back again to the heat exchanger, thus forcing liquid recycle. As the concentration of nonvolatiles increased in the recycle liquid, small portions of the liquid were removed from time to time through a heated withdrawal pipe and valve to keep the concentration of nonvolatiles constant at a predetermined level. The vapors from the vapor body passed through piping to the oxidation section. In the oxidation section, oxygen was added to the vapor stream to give a 2% concentration and the mixed gases passed through an electrically heated preheater and then through a vertical bed of catalyst in an oxidation reactor. The hot reacted gases were then passed through a water-cooled heat exchanger to condense the water and other condensibles. The condensed product was collected in a product tank. Flow meters, pressure gauges, thermocouples, and sampling points around the system allowed the performance of the system to be monitored.

An actual wastewater consisting of a mixture of leachate from a hazardous waste landfill and wastewaters separated from other hazardous wastes was used in this test. Because the run spanned a considerable time period and the treated wastewater was taken from a wastewater storage tank on a daily basis, the feed varied somewhat from day to day during the run. A representative analysis is given in Table 6. In appearance, the wastewater was a pale yellow clear liquid having a disagreeable odor.

During the run, the wastewater feed rate averaged 15.4 gallons (70.0 litres) per hour. The crystal clear odorless condensate averaged 15.0 gallons (68.2 litres) per hour. The non-volatiles were withdrawn at an average rate of 0.4 gallon (1.82 litres) per hour. This stream was a dark brown, very smelly slurry averaging 30% suspended solids and 50% total solids. The system pressure was essentially atmospheric, pressure being only that due to pressure drop across the system (1 to 3 psig, 108 to 122 kPa abs.). The oxidation temperature ranged from about 880°F to about 1240°F (about 470°C to about 670°C) while the gas space velocity varied from about 23 sec-1 to about 30 sec-1. The feed total organic carbon (TOC) values obtained regularly during the run ranged from 1200 to 1500 ppm and the product TOC values obtained on samples taken periodically during the run ranged from 15 to 128 ppm. At the end of the run period, the unit was lined out with the oxidation temperature at about 1080°F (about 580°C) and at a space velocity of about 27 sec-1. A sample of the condensate taken from the product tank at the end of the run had the product analysis shown in Table 6. There was no evidence of catalyst deactivation during the run.

A priority pollutant scan involves analysis for 112 specific organic compounds and 12 specific heavy metal ions. Shown in Table 6 are only those priority pollutants that were actually found although all were analyzed for. Different laboratories were used for the two analyses shown; the laboratory which analyzed the product had lower detection limits. Where a value in Table 6 is reported using the symbol "<", this denotes the detection limit for that specific substance at that laboratory, and the "<" sign indicates that the substance was not detected. Where a substance was detected, the value obtained is listed in Table 6.

As can be seen from the data in Table 6, the process of the instant invention removed trace volatile organic compounds and nonvolatiles to extremely low levels and produced clean water from a very polluted wastewater containing a significant amount of nonvolatile impurities as well as volatile impurities.

## TABLE 6

### Continuous Pilot Scale Run

| | Feed Analysis | Product Analysis |
|---|---|---|
| pH | 3 | 2.2 |
| Total Suspended Solids, ppm | <40 | 1.8 |
| Total Dissolved Solids, ppm | 15100 | <40 |
| BOD, mg/l oxygen | | <1.0 |
| COD, mg/l oxygen | | 18.9 |
| TOC, ppm | 1350 | 15.2 |
| | | |
| Priority Organic Pollutants, ppm | | |
| Methylene chloride | 104 | <0.01 |
| 1,1,1-Trichloroethane | 0.08 | 0.02 |
| Benzene | 0.08 | <0.01 |
| Toluene | 0.14 | <0.01 |
| Acetone | 20.8 | <0.01 |
| Tetrachloroethylene | 0.32 | <0.01 |
| 4-Methyl-2-pentanone | 1.7 | <0.01 |
| 2-butanone | 12.6 | <0.01 |
| 1,2-Dichloroethane | 0.35 | <0.01 |
| 1,1,2-Trichlorethane | <0.07 | 0.03 |
| | | |
| Priority Heavy Metals, ppm | | |
| Arsenic | 7.9 | <0.05 |
| Beryllium | 0.22 | <0.02 |
| Cadmium | 0.28 | <0.02 |
| Chromium | 3.5 | 1.6 |
| Nickel | 112 | 1.8 |
| Zinc | 29 | 0.04 |

The present invention has been described in terms of certain preferred embodiments. Of course, numerous other embodiments not specifically described may fall within the spirit or scope of the following claims.

## Claims

1. A process for continuously treating a waste stream contaminated with volatile chemically oxidizable pollutants and nonvolatile pollutants comprising, in combination the steps of:

(a) continuously concentrating the nonvolatile pollutants in the waste stream to be treated by a continuous evaporation process that simultaneously produces a first stream comprising the concentrated nonvolatile pollutants and a second water rich vapour phase stream substantially free of minerals, dissolved solids and metals, the second stream comprising steam and volatile chemically oxidizable pollutants originally contained in the waste stream;

(b) removing from the continuous evaporation process the first stream comprising concentrated nonvolatile pollutants, the removal occurring while the continuous evaporation process is ongoing;

(c) recycling the first stream;

(d) removing a slip stream from the first stream;

11

EP 0 354 656 B1

(e) contacting substantially all of the second stream with a solid oxidation catalyst in the presence of steam at gas phase oxidation conditions to convert the volatile chemically oxidizable pollutants, thereby producing a gaseous reaction product comprising steam and incondensable gases;

characterized in that the process comprises the additional steps of:

(f) condensing the gaseous reaction product and indirectly contacting the waste stream with the condensed reaction product, thereby supplying a portion of the energy required for evaporation of the waste stream and preheating it prior to subjection of the waste stream to the evaporation process in which the volatile pollutants and water are evaporated; and

(g) recycling that portion of the first stream comprising concentrated nonvolatile pollutants of substantially the same composition as that in the first stream, from which the slip stream has been removed, directly back to the continuous evaporation process without subjecting the recycled first stream to any indirect heating means, the waste stream being added to the recycled portion of the first stream at a point downstream of the removal of the slip stream and upstream of the continuous evaporation process and in that;

(h) the solid oxidation catalyst is in the form of particles and comprises a non precious metal.

2. The process of claim 1, further characterized in that the waste stream to be treated comprises at least about 10,000 mg/l of nonvolatile pollutants.

3. The process of claim 1, or claim 2, further characterized in that substantially all the volatile chemically oxidizable pollutants originally contained in the waste stream are removed from the evaporation process via the second stream.

4. The process of any preceding claim, further characterized in that the second stream is admixed with an oxygen containing stream.

5. The process of any preceding claim, further characterized in that the oxidation conditions comprise a reaction temperature from about 371°C to about 677°C, a gas space velocity from about 5 to about 100 sec$^{-1}$ and a pressure of from about atmospheric to about 446 kPa (abs).

6. The process of any preceding claim, further characterized in that the solid oxidation catalyst comprises an inorganic oxide support containing at least one metal oxide.

7. The process of claim 6, further characterized in that the metal oxide comprises chromium and the inorganic support comprises alumina.

8. The process of any preceding claim, further characterized in that the second stream is compressed to increase its heat value.

9. The process of any preceding claim, further characterized in that the gaseous reaction product is compressed to increase its heat value.

10. The process of any preceding claim, further characterised in that heat from the gaseous reaction product is recovered by condensing the gaseous reaction product to produce a condensate product of distilled water quality containing substantially no mineral or dissolved organics.

**Patentansprüche**

1. Verfahren zur kontinuierlichen Behandlung eines Abwasserstromes, der mit flüchtigen, chemisch oxidierbaren Verunreinigungen und mit nicht flüchtigen Verunreinigungen belastet ist, welches in Kombination die Schritte umfaßt:

(a) kontinuierliches Konzentrieren der nicht flüchtigen Verunreinigungen in dem zu behandelnden Abwasserstrom durch einen kontinuierlichen Verdampfungsprozeß, welcher gleichzeitig einen ersten Strom, der die konzentrierten, nicht flüchtigen Verunreinigungen aufweist, und einen zweiten, wasserreichen Dampfphasenstrom erzeugt, der im wesentlichen frei von Mineralien, gelösten Feststoffen und Metallen ist, wobei der zweite Strom Dampf und flüchtige, chemisch oyidierbare Verunreinigungen enthält, die ursprünglich in dem Abwasserstrom enthalten waren;

12

(b) Abtrennen des ersten, die konzentrierten nicht flüchtigen Verunreinigungen enthaltenden Stromes von dem kontinuierlichen Verdampfungsprozeß, wobei die Abtrennung vorgenommen wird, während der kontinuierliche Verdampfungsprozeß weiterläuft;

(c) Recyceln des ersten Stromes;

(d) Abtrenneneinen Schlickerstromes von dem ersten Strom;

(e) Inkontaktbringen im wesentlichen des gesamten zweiten Stromes mit einem festen Oxidationskatalysator in Anwesenheit von Dampf bei Gasphasen-Oxidationsbedingungen, um die flüchtigen, chemisch oxidierbaren Verunreinigungen umzuwandeln und hierdurch ein gasförmiges Reaktionsprodukt zu erzeugen, das Dampf und nicht kondensierbare Gase enthält;

dadurch gekennzeichnet, daß das Verfahren die zusätzlichen Schritte umfaßt:

(f) Kondensieren des gasförmigen Reaktionsproduktes und indirektes Inkontaktbringen des Abwasserstromes mit dem kondensierten Reaktionsprodukt, so daß hierdurch ein Teil der für die Verdampfung des Abwasserstromes erforderlichen Energie zugeführt und dieser vorgeheizt wird, bevor der Abwasserstrom dem Verdampfungsprozeß unterworfen wird, bei dem die flüchtigen Verunreinigungen und Wasser verdampft werden; und

(g) Recyceln des Teils des ersten Stromes, welcher konzentrierte, nicht flüchtige Verunreinigungen von im wesentlichen derselben Zusammensetzung wie in dem ersten Strom aufweist, von welchem der Schlickerstrom abgetrennt worden ist, direkt zurück zu dem kontinuierlichen Verdampfungsprozeß, ohne den recycelten ersten Strom irgendeiner indirekten Heizungseinrichtung auszusetzen, wobei der Abwasserstrom dem recycelten Teil des ersten Stromes an einer Stelle stromab der Abtrennung des Schlickerstromes und stromaufwärts des kontinuierlichen Verdampfungsprozesses zugegeben wird, und daß

(h) der feste Oxidationskatalysator von Partikelform ist und ein Nicht-Edelmetall enthält.

2. Verfahren nach Anspruch 1, ferner gekennzeichnet dadurch, daß der zu behandelnde Abwasserstrom zumindest etwa 10.000 mg/l an nicht flüchtigen Verunreinigungen enthält.

3. Verfahren nach Anspruch 1 oder Anspruch 2, ferner gekennzeichnet dadurch, daß im wesentlichen alle flüchtigen, chemisch oxidierbaren Verunreinigungen, die ursprünglich in dem Abwasserstrom enthalten waren, von dem Verdampfungsprozeß über den zweiten Strom abgetrennt werden.

4. Verfahren nachirgendeinem vorangegangenen Anspruch, ferner dadurch gekennzeichnet, daß dem zweiten Strom ein Sauerstoff enthaltender Strom zugemischt wird.

5. Verfahren nach irgendeinem vorangegangenen Anspruch, ferner dadurch gekennzeichnet, daß die Oxidationsbedingungen eine Reaktionstemperatur von etwa 371°C bis etwa 677°C, eine Gasraumgeschwindigkeit von etwa 5 bis etwa 100 Sek.$^{-1}$ und einen Druck von etwa Atmosphärendruck bis etwa 446 kPa (abs) umfassen.

6. Verfahren nach irgendeinem vorangegangenen Anspruch, ferner dadurch gekennzeichnet, daß der feste Oxidationskatalysator einen anorganischen Oxidträger aufweist, der zumindest ein Metalloxid enthält.

7. Verfahren nach Anspruch 6, ferner dadurch gekennzeichnet, daß das Metalloxid Chrom umfaßt und daß der anorganische Träger Aluminium umfaßt.

8. Verfahren nach irgendeinem vorangegangenen Anspruch, ferner dadurch gekennzeichnet, daß der zweite Strom komprimiert wird, um seinen Wärmewert zu erhöhen.

9. Verfahren nach irgendeinem vorangegangenen Anspruch, dadurch gekennzeichnet, daß das gasförmige Reaktionsprodukt komprimiert wird, um seinen Wärmewert zu erhöhen.

10. Verfahren nach irgendeinem vorangegangenen Anspruch, ferner dadurch gekennzeichnet, daß die Wärme des gasförmigen Reaktionsproduktes durch Kondensieren des gasförmigen Reaktionsproduktes wiedergewonnen wird, um ein Kondensatprodukt von der Qualität destillierten Wassers zu erzeugen, welches im wesentlichen keine Mineralien oder gelösten organischen Stoffe enthält.

**Revendications**

1. Procédé de traitement continu d'un courant de rejet contaminé par des produits polluants volatils pouvant être oxydés chimiquement et des produits polluants non volatils, comprenant, en combinaison, les opérations consistant :

(a) à concentrer en continu les produits polluants non volatils contenus dans le courant de rejet à traiter, au moyen d'un processus d'évaporation continue qui produit en même temps un premier courant, comprenant les produits polluants non volatils concentrés, et un second courant, en phase vapeur et riche en eau, qui est pratiquement exempt de matières minérales, de matières solides dissoutes et de métaux, ce second courant comprenant de la vapeur d'eau et des produits polluants volatils pouvant être oxydés chimiquement qui étaient initialement contenus dans le courant de rejet,

(b) à extraire du processus d'évaparation continue le premier courant comprenant les produits polluants non volatils concentrés, l'extraction ayant lieu pendant que le processus d'évaporation continue se déroule,

(c) à recycler le premier courant,

(d) à soutirer du premier courant un courant à l'état de bouillie,

(e) à mettre pratiquement tout le second courant au contact d'un catalyseur d'oxydation solide, en présence de vapeur d'eau et dans des conditions d'oxydation en phase gazeuse, de façon à convertir les produits polluants volatils pouvant être oxydés chimiquement, ce qui fournit un produit de réaction gazeux comprenant de la vapeur d'eau et des gaz incondensables,

ce procédé étant caractérisé par les opérations supplémentaires consistant :

(f) à condenser le produit de réaction gazeux et à mettre le courant de rejet en contact indirect avec le produit de réaction gazeux, ce qui fournit une partie de l'énergie nécessaire pour l'évaporation du courant de rejet et réalise un préchauffage de ce courant de rejet avant que ce dernier soit soumis au processus d'évaporation au cours duquel les produits polluants volatils et l'eau sont évaporés, et

(g) à recycler la partie du premier courant comprenant les produits polluants non volatils concentrés, ayant pratiquement la même composition que celle du premier courant, à partir de laquelle le courant à l'état de bouillie a été extrait, directement en retour vers le processus d'évaporation continue, sans soumettre le premier courant recyclé à un quelconque moyen de chauffage indirect, le courant de rejet étant ajouté à la partie recyclée du premier courant en un point situé en aval de l'extraction du courant à l'état de bouillie et en amont du processus d'évaporation continue, et en ce que :

(h) le catalyseur d'oxydation solide se présente sous la forme de particules et comprend un métal non précieux.

2. Procédé suivant la revendication 1, caractérisé en outre en ce que le courant de rejet à traiter comprend au moins 10 000 mg/l de produits polluants non volatils.

3. Procédé suivant l'une quelconque des revendications 1 et 2, caractérisé en outre en ce que pratiquement la totalité des produits polluants, volatils et pouvant être oxydés ohimiquement, initialement contenus dans le courant de rejet est extraite du processus d'évaporation par l'intermédiaire du second courant.

4. Procédé suivant l'une quelconque des revendications précédentes, caractérisé en outre en ce que le second courant est mélangé à un courant contenant de l'oxygène.

5. Procédé suivant l'une quelconque des revendications précédentes, caractérisé en outre en ce que les conditions d'oxydation sont constituées par une température de réaction comprise entre 371 °C environ et 677 °C environ, une vitesse spatiale des gaz comprise entre 5 s⁻¹ environ et 100 s⁻¹ environ et une pression comprise entre la pression atmosphérique environ et 446 kPa environ de pression absolue.

6. Procédé suivant l'une quelconque des revendications précédentes, caractérisé en outre en ce que le catalyseur d'oxydation solide comprend un support d'oxyde inorganique contenant au moins un oxyde métallique.

7. Procédé suivant la revendication 6, caractérisé en outre en ce que l'oxyde métallique contient du chrome et le support non organique comprend de l'alumine.

**8.** Procédé suivant l'une quelconque des revendications précédentes, caractérisé en outre en ce que le second courant est comprimé de façon à accroître sa valeur thermique.

**9.** Procédé suivant l'une quelconque des revendications précédentes, caractérisé en outre en ce que le produit de réaction gazeux est comprimé de façon à accroître sa valeur thermique.

**10.** Procédé suivant l'une quelconque des revendications précédentes, caractérisé en outre en ce que la chaleur dégagée par le produit de réaction gazeux est récupérée en condensant ce produit de réaction gazeux de façon à produire un condensat ayant la qualité de l'eau distillée, ne contenant pratiquement pas de matière minérale ou de matières organiques dissoutes.

FIG.1

FIG.2

FIG.3